# FASCICULE DE BREVET EUROPEEN

(11) **EP 1 198 868 B1**
(45) Date de publication et mention de la délivrance du brevet: **23.04.2003**
(21) Numéro de dépôt: 00951663.4
(22) Date de dépôt: 12.07.2000
(51) Int. Cl.: H01S 5/10, H01S 3/083, G02B 6/34

(54) **FILTRE OPTIQUE A REPONSE RECTANGULAIRE PERMETTANT LE DECOUPAGE D'UN INTERVALLE SPECTRAL LIMITE**
OPTISCHER FILTER MIT RECHTECKIGER CHARAKTERISTIK, DER EINE SPEKTRAL BEGRENTZTE EINTEILUNG ERMÖGLICHT
RECTANGULAR RESPONSE OPTICAL FILTER FOR PARTITIONING A LIMITED SPECTRAL INTERVAL

(30) Priorité: 12.07.1999 FR 9909024
(43) Date de publication de la demande: 24.04.2002
(73) Titulaire: NetTest Photonics, 78340 Les Clayes sous Bois (FR)
(72) Inventeur: LEFEVRE, Hervé, F-75014 Paris (FR)
(74) Mandataire: Michelet, Alain
(86) Numéro de dépôt international: FR0002018
(87) Numéro de publication internationale: WO01005006

(56) Documents cités:
- EP-A- 0 859 249
- I. NISHI, T.OGUCHI, K.KATO: "Braod Passband Multi/Demultiplexer for Multimode Fibers using a diffraction grating and retroreflectors." JOURNAL OF LIGHTWAVE TECHNOLOGY, vol. LT-5, no. 12, décembre 1987 (1987-12), pages 1695-1700, XP002121418
- CHI-LUEN WANG ET AL: "DUAL-WAVELENGHT ECTIVELY MODE-LOCKED LASER-DIODE ARRAY WITH AN EXTERNAL GRATING-LOADED CAVITY" OPTICS LETTERS, vol. 19, no. 18, 15 septembre 1994 (1994-09-15), pages 1456-1458, XP000445462 ISSN: 0146-9592
- KU P -C ET AL: "MULTIPLE CROSS SWITCHING IN A TWO-MODE SEMICONDUCTOR LASER" APPLIED PHYSICS LETTERS, vol. 69, no. 26, 23 décembre 1996 (1996-12-23), pages 3984-3986, XP000643685 ISSN: 0003-6951
- M SHIRASAKI ET AL: "BROADING OF BANDWIDTHS IN GRATING MULTIPLEXER BY ORIGINAL DISPERSION-DIVIDING PRISM" ELECTRONICS LETTERS, vol. 22, no. 14, 1 juillet 1986 (1986-07-01), page 764/765 XP002058272 ISSN: 0013-5194

## Description

La présente invention concerne un filtre optique à réponse rectangulaire permettant le découpage d'un intervalle spectral limité et ayant des fibres optiques préférentiellement monomodes comme portes d'entrée et de sortie.

Le développement des télécommunications par fibre optique multiplexée en longueur d'onde requiert la mise au point et l'optimisation de tels dispositifs. On recherche en particulier à découper un spectre large en domaines spectraux dits ici- intervalle spectral limité - tout en évitant les superpositions et diaphonies susceptibles d'en résulter.

De nombreux dispositifs ont déjà été proposés à cet effet, la plupart d'entre eux consistant à étaler le spectre lumineux dans un plan et à placer dans ce plan, une fente délimitant la bande spectrale étroite que l'on veut sélectionner, mais alors la lumière ne peut pas être recouplée efficacement dans une fibre optique monomode.

D'autres dispositifs mettent en oeuvre des ensembles de composants en optique guidée : coupleurs, multiplexeurs-démultiplexeurs,...

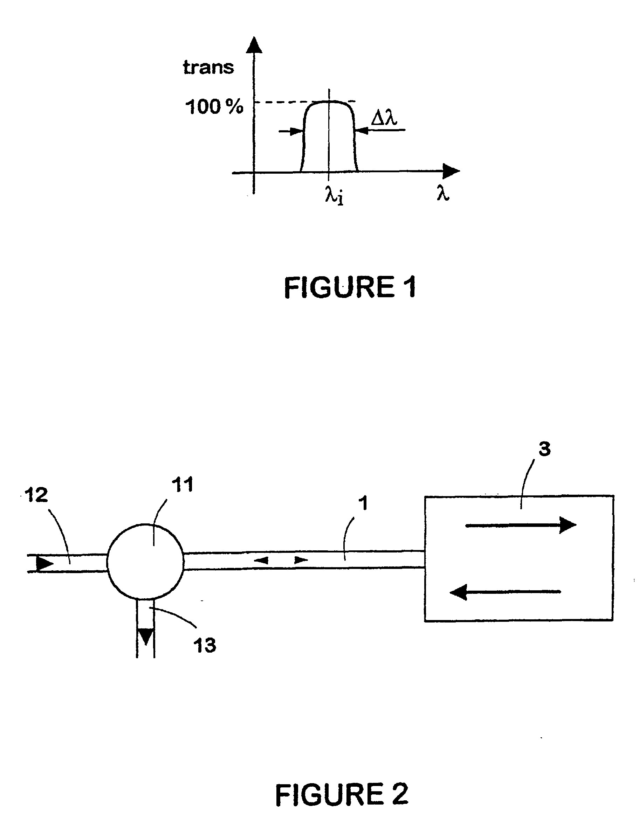

L'optimisation de ces dispositifs impliquent d'obtenir des fonctions de transmission rectangulaire et sans perte du flux lumineux d'intervalle spectral limité sélectionné, c'est-à-dire que dans une représentation de l'intensité du flux lumineux transmis en fonction de la longueur d'onde telle que celle de la figure 1, la bande découpée ait des bords aussi verticaux que possible et un sommet aussi plat que possible et les pertes soient aussi faibles que possible. L'aplatissement du sommet est obtenu selon l'état de l'art en générant des pertes.

EP-A-0 859 249 divulgue un multiplexeur/démultiplexeur à réponse rectangulaire comprenant:
- une fibre optique d'entrée ayant une extrémité,
- un ensemble réseau-réflecteur dans la configuration de Littman-Metcalf,
- un système optique convergent de collimation au foyer duquel est placée l'extrémité de la fibre d'entrée,
- un séparateur de polarisation placé entre la fibre d'entrée et le réseau et produisant deux faisceaux lumineux élémentaires parallèles et polarisés orthogonalement l'un à l'autre, et
- une lame λ/2 étant placée sur l'un des faisceaux élémentaires de façon à produire deux faisceaux parallèles élémentaires polarisés dans une direction orthogonale aux traits du réseau,
le réflecteur de la configuration de Littman-Metcaif renvoyant chaque faisceau élémentaire sur le chemin et en direction opposée de l'autre.

L'objet de la revendication 1 diffère de cet ensemble connu en ce qu'il s'agit d'un filtre optique permettant le découpage d'un intervalle spectral limité dans un flux lumineux de spectre large, comportant:
- un système optique convergent de focalisation placé entre le réseau et le réflecteur, et
- au moins un réflecteur placé dans le plan focal du système optique de focalisation qui a une dimension limitée dans le plan de dispersion, la position et la dimension limitée du réflecteur dans le plan de dispersion déterminant l'intervalle spectral découpé.

On connaît aussi un document (I. Nishi et al., Décembre 1987) qui divulgue un multiplexeur-démultiplexeur à large bande pour filtre multimode. Il propose la mise en oeuvre d'un système rétrodispersif en configuration de Littrow par rapport à une fibre d'entrée et des fibres de sortie. Ce document précise que la largeur de la bande passante de ce dispositif est déterminée par la longueur du rétroréflecteur.

Par ailleurs, dans un article publié (Chi-Luen Wang et al., 1994), est décrit un laser à cavité externe dans laquelle la cavité externe est configurée de telle sorte qu'elle permet le filtrage de deux longueurs d'onde. Le filtrage est réalisé par des bandes réfléchissantes constituant des miroirs réflecteurs coopérant avec un réseau.

La mise en oeuvre de l'enseignement de ces documents ne permet pas la réalisation d'un dispositif stable en transmission et assurant une bonne précision.

Les inventeurs se sont donnés pour objectif de réaliser un tel dispositif mettant en oeuvre un ensemble réseau-réflecteur dans la configuration de Littman-Metcalf pour profiter des performances élevées offertes par ce type de configuration et que ce dispositif ne génère pas de pertes et possède des fibres optiques, de préférence monomodes, comme portes d'entrée et de sortie, assurant une stabilité et une précision optimisées.

Ainsi, l'invention concerne un filtre optique à réponse rectangulaire permettant le découpage d'un intervalle spectral limité dans un flux lumineux de spectre large comprenant :
- une fibre optique d'entrée ayant une extrémité,
- un ensemble réseau-réflecteur dans la configuration de Littman-Metcalf,
- un système optique convergent de collimation au foyer duquel est placée l'extrémité de la fibre d'entrée,
- un système optique convergent de focalisation placé entre le réseau et le réflecteur,
- au moins un réflecteur placé dans le plan focal du système optique de focalisation qui a une dimension limitée dans le plan de dispersion, la position et la dimension limitée du réflecteur dans le plan de dispersion déterminant l'intervalle spectral découpé.

Selon l'invention, le filtre optique comporte un séparateur de polarisation placé entre la fibre d'entrée et le réseau et produisant deux faisceaux lumineux élémentaires parallèles et polarisés orthogonalement l'un à l'autre, une lame λ/2 étant placée sur l'un des faisceaux élémentaires de façon à produire deux faisceaux parallèles élémentaires polarisés dans une direction orthogonale aux traits du réseau, le réflecteur de la configuration de Littman-Metcalf renvoyant chaque faisceau élémentaire sur le chemin et en direction opposée de l'autre.

Dans différents modes de réalisation présentant chacun ses avantages spécifiques et susceptibles d'être utilisés selon toutes les combinaisons techniquement compatibles:
- la fibre optique d'entrée est une fibre monomode,
- le flux lumineux de spectre limité produit est collecté dans une fibre optique de sortie distincte de la fibre d'entrée et de même type que celle-ci,
- le filtre optique comporte plusieurs fibres optiques de sortie, chacune étant associée à un réflecteur, ces réflecteurs étant placés dans le plan focal du système optique de focalisation et ayant une dimension faible dans le plan de dispersion et déterminant un intervalle spectral particulier,
- le flux lumineux de spectre limité produit est collecté par la fibre d'entrée et que celle-ci porte un circulateur optique permettant de séparer le flux de sortie du flux entrant sans perte d'énergie,
- le filtre optique comporte un réflecteur de repliement assurant un doublement des passages du faisceau lumineux sur le réseau,
- le réflecteur de la configuration de Littman-Metcalf est un miroir plan associé à un bi-prisme,
- le réflecteur de la configuration de Littman-Metcalf est un dièdre tronqué.

L'invention sera décrite plus en détail en référence aux dessins annexés dans lesquels :
- la figure 1 est une représentation d'un spectre découpé par le dispositif de l'invention ;
- la figure 2 est une représentation d'un dispositif de l'invention mis en oeuvre avec un circulateur;
- les figure 3A et 3B sont une représentation d'une configuration de Littman-Metcalf utilisée de manière traditionnelle;
- les figures 4A et 4B sont une représentation d'un premier mode de réalisation de l'invention ;
- les figures 5A et 5B sont une représentation d'un premier mode de réalisation de l'invention, avec compensation des effets de polarisation dus au réseau ;
- les figures 6A et 6B sont une représentation d'un deuxième mode de réalisation de l'invention mettant en oeuvre une fibre de sortie distincte de la fibre d'entrée ;
- la figure 7 est une vue détaillée d'un réflecteur mis en oeuvre dans le deuxième mode de réalisation ;
- la figure 8 est une vue détaillée d'un type de réflecteur alternatif pouvant être mis en oeuvre dans le deuxième mode de réalisation ;
- les figures 9A, 9B et 9C sont une représentation d'un quatrième mode de réalisation de l'invention ;
- la figure 10 est un mode de réalisation de l'invention mettant en oeuvre un réflecteur alternatif dans le premier mode de réalisation de l'invention.

La figure 1 est donc un graphique représentant l'énergie du flux lumineux sortant du dispositif de découpage de l'invention, en fonction de la longueur d'onde λ. Le spectre entrant est supposé étendu, en longueur d'onde, à l'échelle de ce graphique étendu et le dispositif de l'invention permet de découper une bande étroite représentée par une fonction aussi proche que possible d'une fonction rectangulaire, de largeur Δλ centrée sur une longueur d'onde λᵢ.

Le dispositif de l'invention comporte donc une fibre d'entrée 1 ayant une extrémité 2. Le dispositif de découpage de l'invention dans son ensemble est désigné par la référence 3. Ce dispositif comporte un ensemble réseau 4-réflecteur 5 dans la configuration de Littman-Metcalf.

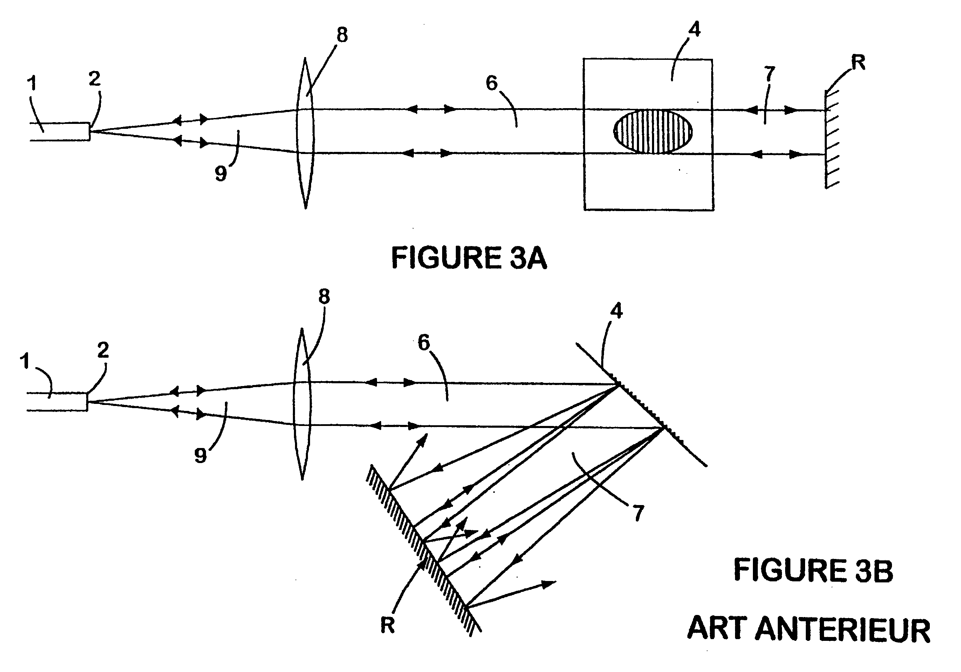

On sait que dans la configuration habituelle de Littman-Metcalf qui est représentée sur les figures 3A et 3B, le faisceau collimaté incident fait un angle θ₁ avec la normale au réseau. Un réflecteur R est placé avec sa normale ayant un angle θ₂ sur le réseau. La longueur d'onde λ qui respecte la condition λ = p (sin θ₁ + sin θ₂) où p est le pas du réseau, est dispersée par le réseau à un angle θ₂ puis rétroréfléchie par le réflecteur qui lui est alors perpendiculaire. Enfin, elle est dispersée de nouveau dans le réseau au retour et ressort sous l'angle θ₁ d'entrée. La longueur d'onde λ est donc ainsi sélectionnée par la cavité. Il est possible de faire varier cette longueur d'onde λ en faisant varier l'orientation de l'ensemble réseau-réflecteur, c'est-à-dire en faisant varier θ₁ ou bien en faisant varier uniquement l'orientation du réflecteur, c'est-à-dire en faisant varier θ₂ ou enfin en faisant varier uniquement l'orientation du réseau, c'est-à-dire en faisant varier θ₁ et θ₂ tout en conservant θ₁ - θ₂ constant.

Dans la description de tels dispositifs, on appelle traditionnellement - plan de dispersion - le plan perpendiculaire aux traits du réseau contenant le rayon central du faisceau incident et les rayons centraux des faisceaux dispersés par le réseau, c'est celui de la figure 3B.

Pour chaque faisceau, on appellera - plan transverse - le plan perpendiculaire au rayon central et- plan longitudinal - le plan perpendiculaire au plan de dispersion contenant le rayon central. Le plan longitudinal est donc celui de la figure 3A.

Sur les différentes figures annexées, la vue A est une vue dépliée, c'est-à-dire selon laquelle le faisceau dispersé 7 par le réseau 4 a été représenté dans le prolongement direct du faisceau incident 6 pour améliorer la lisibilité. La vue B est une représentation vue du dessus, c'est-à-dire dans un plan parallèle au plan de dispersion.

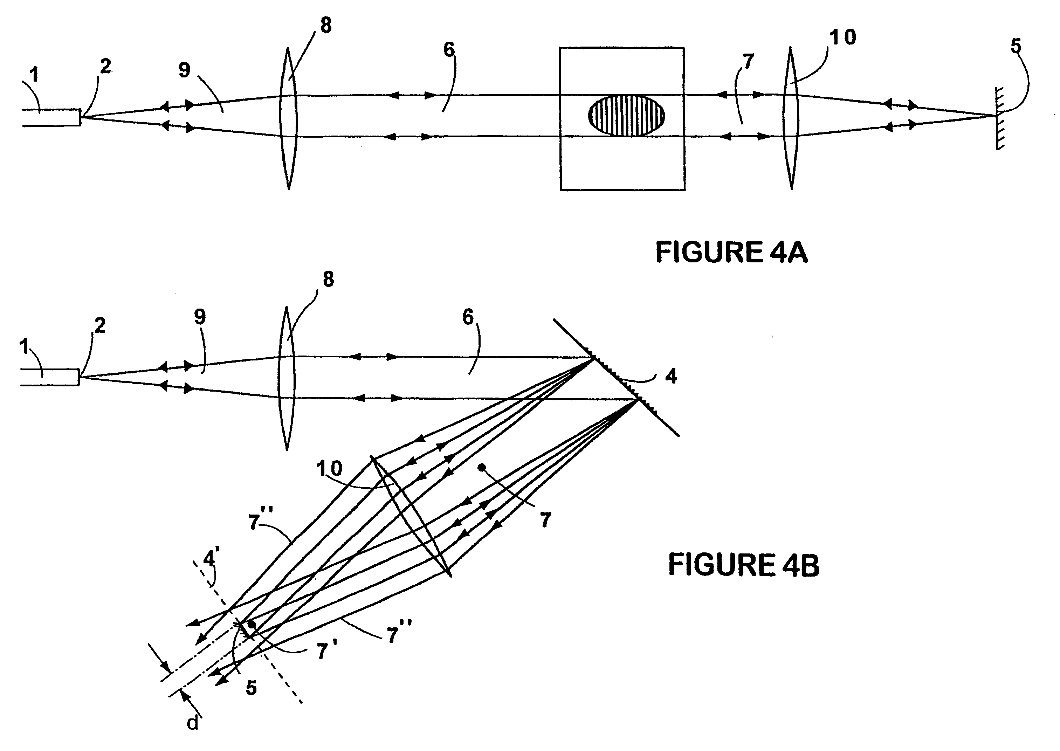

La figure 4 avec ses vues A et B présente un système dans lequel la sélection en longueur d'onde est réalisée par les dimensions géométriques d'un miroir associé à un réseau dans la configuration de Littman-Metcalf. Un système optique convergent 8 au foyer duquel est placée l'extrémité 2 de la fibre d'entrée 1, collimate le faisceau 9 émis par l'extrémité de la fibre, de telle sorte que le faisceau incident 6 sur le réseau est un faisceau collimaté. Ainsi, le ou les faisceaux dispersés 7 sont des faisceaux également collimatés et un système optique convergent 10 focalise ces faisceaux dans son plan focal 4' où est placé un miroir 5 qui a une dimension d limitée dans le plan de dispersion tel que cela apparaît sur la figure 4B. Pour les longueurs d'onde correspondant aux faisceaux 7' se réfléchissant sur le miroir, le système se comporte en oeil-de-chat, et donc ces longueurs d'onde se recouplent en retour dans la fibre d'entrée, qu'elle soit monomode ou multimode.

Ainsi, ce miroir ne renvoie vers le système optique 10 et donc vers le réseau 4, qu'une partie limitée du spectre, les longueurs d'onde correspondant aux faisceaux extérieurs 7" n'étant pas réfléchies.

Ce flux découpé et reçu en retour par le système optique 8 puis par la fibre optique 1 qui joue ainsi dans ce mode de réalisation, le rôle de fibre optique d'entrée et de sortie.

Différents dispositifs sont concevables pour séparer les flux d'entrée et flux de sortie, en particulier, de manière préférée, on a représenté sur la figure 2, un circulateur qui permet de réaliser cette séparation avec des pertes d'énergie minimales.

La fibre d'entrée-sortie 1 reliée au dispositif de découpage 3 est donc reliée à son autre extrémité au circulateur 11 qui possède une entrée 12 et une sortie 13.

Ce dispositif de sélection en longueur d'onde fonctionne convenablement mais se révèle encore instable et fournissant des flux lumineux ou signaux imprécis.

Pour éviter ces défauts, on s'est attaché, selon l'invention, à s'affranchir des défauts de polarisation.

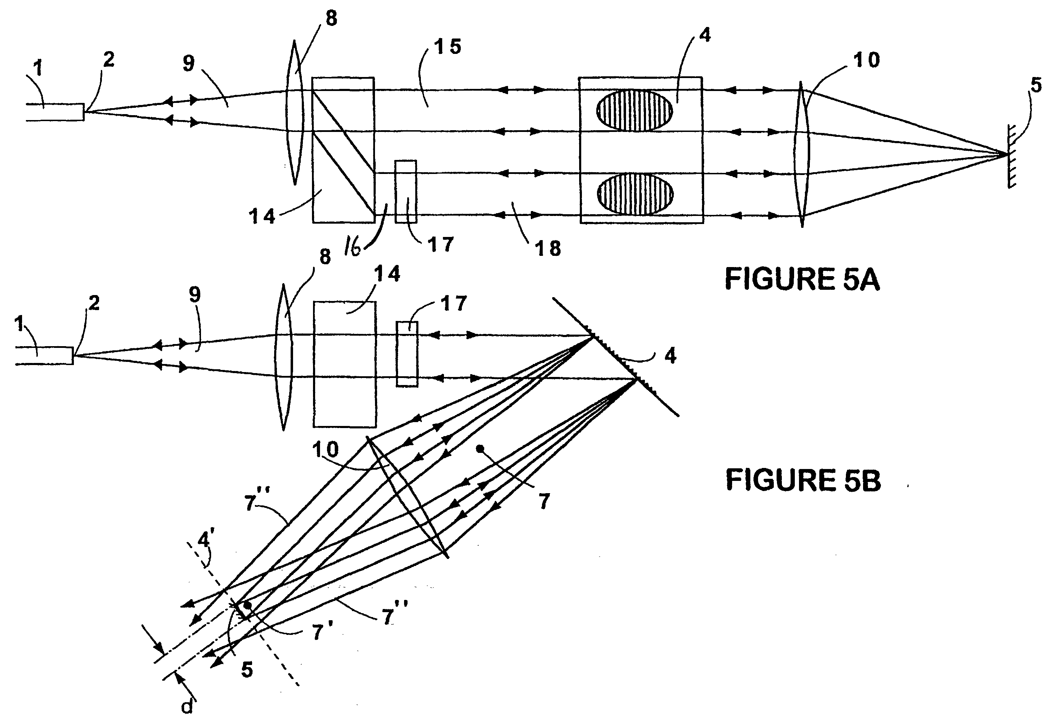

Ainsi, tel que représenté sur les figures 5A et 5B, on a mis en oeuvre un dispositif compensant les effets de polarisation connus susceptibles d'être introduits par le réseau 4 et de produire des effets parasites.

A cet effet, le faisceau collimaté 6 émergeant du système optique 8 est divisé par le séparateur de polarisation 14 en deux faisceaux parallèles, respectivement 15 et 16, de polarisation croisée. Une lame λ/2 17 modifie la polarisation du flux 16, de telle sorte que le flux 15 et le flux modifié 18 ont la même polarisation et subissent donc exactement les mêmes effets de la part du réseau 4. La lentille 10 fait converger chacun de ces faisceaux sur le miroir 5 qui échange leurs trajets, ce qui signifie que les trajets de retour des faisceaux 18 et 15 sont échangés après réflexion sur le miroir 5, le faisceau 18 empruntant au retour le chemin optique du faisceau 15 à l'aller et réciproquement.

Ainsi, les faisceaux 18 et 15 sont recombinés au retour et ont subi exactement les mêmes effets du réseau 4.

On évite ainsi tout effet parasite susceptible d'être produit par le réseau en fonction de la polarisation et donc on améliore la forme de la répartition spectrale du flux lumineux découpé.

Différents modes de réalisation préférés permettent la mis en oeuvre du dispositif décrit plus haut et augmentent chacun, la finesse de la bande spectrale découpée et, éventuellement, de permettre le découpage d'un plus grand nombre de bandes élémentaires dans le spectre large incident.

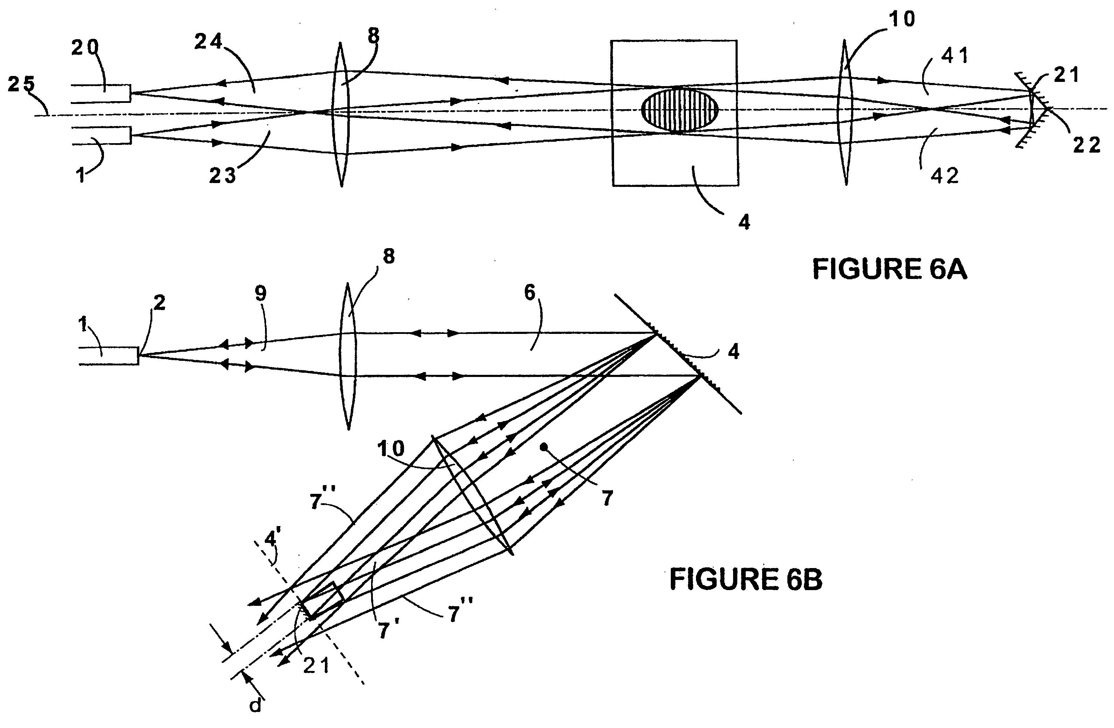

Sur les figures 6A et 6B, on a représenté un mode de réalisation dans lequel la fibre de sortie 20 est distincte de la fibre d'entrée 1.

A cet effet, on utilise à la place du miroir 5, un réflecteur 21 qui, vu dans le plan longitudinal, a la forme d'un dièdre alors qu'il garde une faible dimension d dans le plan de dispersion.

Tel que représenté dans le plan longitudinal, ce dièdre 21 est positionné par rapport au système optique convergent 10 de telle sorte que, après réflexion sur chacune des faces du dièdre 21, les faisceaux entrants parallèles dans le système optique 10 convergent en un faisceau 41 dans le plan milieu 22 du dièdre 21 et émergent sous forme d'un faisceau symétrique 42, permettant ainsi que le faisceau 23 émis par la fibre 1 forme un faisceau 24 symétrique du faisceau 23 par rapport à l'axe optique 25 du système et soit reçu par la fibre 20 placée symétriquement par rapport à cet axe de la fibre d'entrée 1.

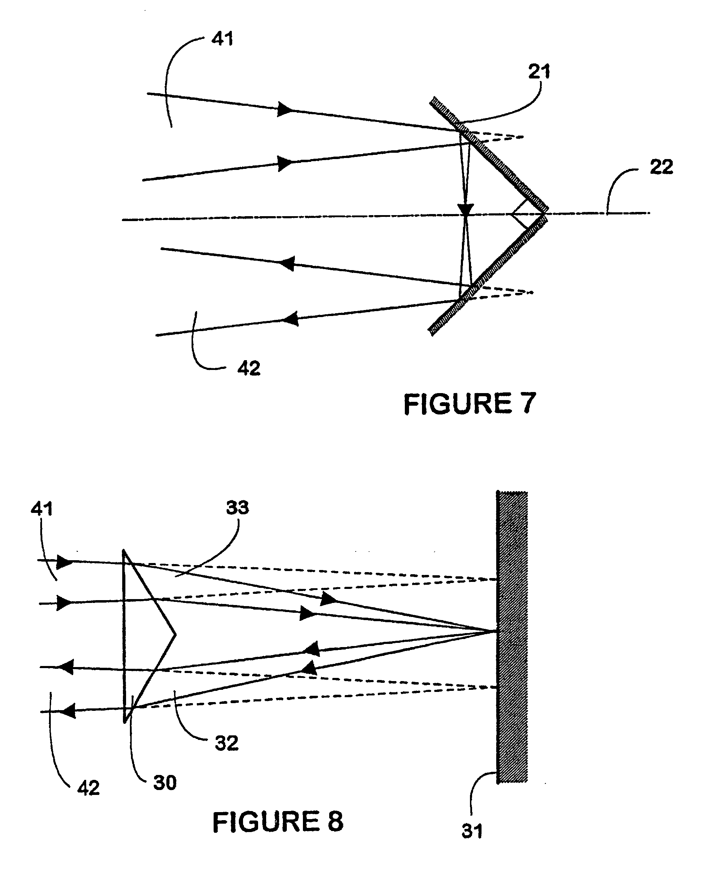

Un tel dièdre est représenté plus en détail sur la figure 7 et ce composant peut être remplacé de manière analogue par l'ensemble représenté sur la figure 8 constitué par un biprisme 30 et un miroir 31. Le miroir 31 étant perpendiculaire à l'axe de symétrie du biprisme 30, un faisceau entrant 41 produisant le faisceau 33 par la déviation du biprisme 30 est convergent dans le plan du miroir 31 et réfléchi symétriquement. Le miroir 31 produisant un faisceau 32 qui, après déviation par le biprisme 30, produit un faisceau 42. Le faisceau 42 est symétrique du faisceau 41. Ce composant 30, 31 permet donc, comme le réflecteur 21, la réalisation d'un faisceau 35 à recevoir par la fibre 20 à partir du faisceau 23 émis par la fibre 1.

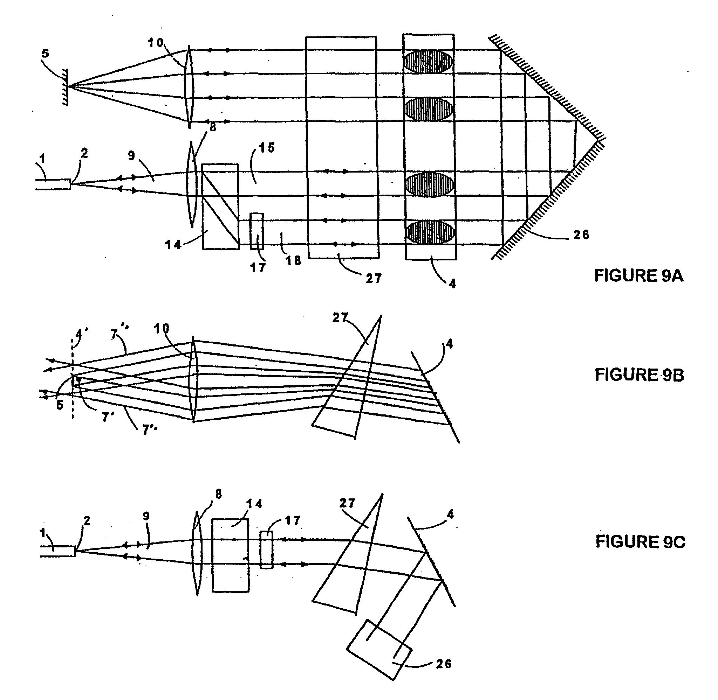

Sur les figures 9 (9A, 9B, 9C), on a représenté un mode de réalisation de l'invention permettant à la fois de compenser les effets de polarisation comme indiqué plus haut, de linéariser la répartition du spectre, en fréquence, dans la zone de découpage et de compenser l'anamorphose habituellement introduit par le réseau.

A cet effet, un séparateur de polarisation est placé après le système optique convergent 8 et décompose le faisceau lumineux incident 9 produit par la fibre optique d'entrée 1 en deux faisceaux 15 et 18. Un prisme 27 est alors placé sur les faisceaux et réalise une première dispersion précédent celle produite par le réseau 4.

On sait qu'il est ainsi possible de produire par l'association du prisme 27 et du réseau 4, une dispersion linéaire en fréquence.

Les faisceaux lumineux sont alors repliés sur eux-mêmes par un réflecteur 26 qui les renvoient donc, en sens inverse, sur l'ensemble disperseur formé par le réseau 4 et le prisme 27.

Pour une meilleure lisibilité, sur les figures 9, on a représenté de manière indépendante, sur la vue A, une représentation transverse du dispositif telles que les vues A des figures 3, 4, 5, 6,sur la vue B, une vue dans le plan de dispersion correspondant à l'étage supérieur de la vue A et, sur la vue C, une vue dans ce même plan de dispersion de l'étage inférieur de la vue A.

A l'étage supérieur, après une nouvelle dispersion par l'ensemble réseau 4-prisme 27, le système optique de collimation 10 focalise ces faisceaux sur le miroir 5 qui opère la sélection spectrale recherchée.

Les faisceaux sélectionnés sont alors réfléchis et suivent un chemin inverse de celui décrit jusqu'à présent pour converger en retour sur l'extrémité 2 de la fibre 1.

Ainsi, la séparation de polarisation permet une action symétrique du réseau lors de chacun de ces passages et évite donc tout effet perturbant, l'association d'un prisme et d'un réseau permet la linéarisation en fréquence dans le plan d'étalement du spectre, c'est-à-dire dans le plan du miroir 5, le double passage de chacun des faisceaux dans l'ensemble disperseur (réseau-prisme) assure la compensation de l'anamorphose et donc un couplage efficace du faisceau sortant dans la fibre 1. Ce quatrième mode de réalisation peut être utilisé en combinaison avec le troisième mode en remplaçant la fibre unique par une fibre d'entrée et une ou plusieurs fibres de sortie et en remplaçant le miroir par un ou plusieurs dièdres réflecteurs ou ensembles miroir-biprisme.

Il peut être aussi utile d'associer chaque fibre avec une microlentille pour réduire la divergence du faisceau 9.

Enfin, ce filtre peut être accordable en modifiant la position ou la largeur d du réflecteur, ou bien en plaçant en rotation le réseau ou l'ensemble système optique de collimation - réflecteur ou enfin le réflecteur de repliement 26. Associé à un détecteur, ce filtre permet de réaliser un analyseur de spectre optique de réponse spectrale rectangulaire.

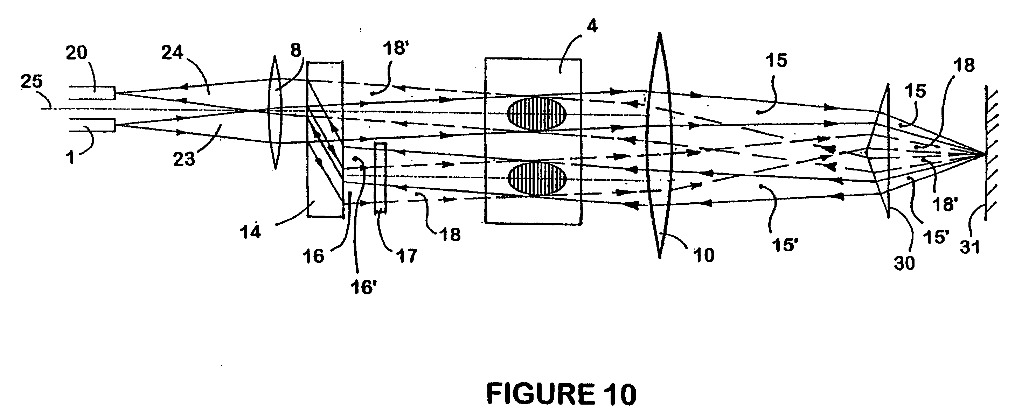

Sur la figure 10, on a représenté un mode de réalisation de l'invention dans lequel la fibre de sortie est distincte de la fibre d'entrée et dans lequel un réflecteur tel que celui représenté et décrit par référence à la figure 8, est utilisé.

Les éléments représentés sur les figures précédentes ont été désignés par les mêmes références numériques tout comme sur les figures 6A et 6B, le faisceau 23 émis par la fibre 1 forme un faisceau 24 symétrique du faisceau 23 par rapport à l'axe optique 25 du système.

Le séparateur de polarisation 14 divise le faisceau entrant 23 en deux faisceaux parallèles, respectivement 15 et 16. Après réflexion sur le miroir 31 et ayant subi une déviation par le biprisme 30 à la fois avant la réflexion et après la réflexion, ces deux faisceaux traversent à nouveau l'ensemble formé par la lame λ/2 17 et le séparateur de polarisation 14 de façon à former le faisceau de retour 24 qui est couplé à la fibre optique 20. Seul le faisceau réfléchi 15' issu du faisceau 15 subit l'effet de la lame λ/2 17. Au contraire, le faisceau réfléchi 18' issu du faisceau incident 18 est adressé au séparateur de polarisation 14 sans subir l'effet de cette lame λ/2. Les faisceaux 18' et 16' (produits à partir du faisceau 15' par l'effet de la lame λ/2 17) sont combinés par le séparateur de polarisation 14 pour former le faisceau 24.

Ce dispositif a été décrit avec un miroir de dimensions et de position fixes.

Dans certaines applications, il peut être utile de faire varier la largeur spectrale du flux sélectionné et/ou sa longueur d'onde centrale. Pour contrôler la largeur spectrale, une fente de largeur variable est placée devant un miroir de grande dimension. La position de la fente dans son plan détermine la longueur d'onde centrale.

## Revendications

1. Filtre optique à réponse rectangulaire permettant le découpage d'un intervalle spectral limité dans un flux lumineux de spectre large comprenant:
- une fibre optique d'entrée (1) ayant une extrémité (2),
- un ensemble réseau-réflecteur (4, 5) dans la configuration de Littman-Metcalf,
- un système optique convergent de collimation (8) au foyer duquel est placée l'extrémité de la fibre d'entrée,
- un système optique convergent de focalisation (10) placé entre le réseau et le réflecteur,
- au moins un réflecteur placé dans le plan focal du système optique de focalisation qui a une dimension limitée dans le plan de dispersion, la position et la dimension limitée du réflecteur dans le plan de dispersion déterminant l'intervalle spectral découpé,
**caractérisé en ce qu'**il comporte un séparateur de polarisation (14) placé entre la fibre d'entrée et le réseau et produisant deux faisceaux (15,16) lumineux élémentaires parallèles et polarisés orthogonalement l'un à l'autre, une lame λ/2 (17) étant placée sur l'un des faisceaux élémentaires de façon à produire deux faisceaux (15, 18) parallèles élémentaires polarisés dans une direction orthogonale aux traits du réseau, le réflecteur de la configuration de Littman-Metcalf renvoyant chaque faisceau élémentaire sur le chemin et en direction opposée de l'autre.

2. Filtre optique selon la revendication 1, **caractérisé en ce que** la fibre optique d'entrée est une fibre monomode.

3. Filtre optique selon l'une des revendications 1 et 2, **caractérisé en ce que** le flux lumineux de spectre limité produit est collecté dans une fibre optique de sortie (20) distincte de la fibre d'entrée et de même type que celle-ci.

4. Filtre optique selon la revendication 3, **caractérisé en ce qu'**il comporte plusieurs fibres optiques de sortie, chacune étant associée à un réflecteur, ces réflecteurs étant placés dans le plan focal du système optique de focalisation et ayant une dimension faible dans le plan de dispersion et déterminant un intervalle spectral particulier.

5. Filtre optique selon l'une des revendications 1 et 2, **caractérisé en ce que** le flux lumineux de spectre limité produit est collecté par la fibre d'entrée et que celle-ci porte un circulateur optique (11) permettant de séparer le flux de sortie du flux entrant sans perte d'énergie.

6. Filtre optique selon l'une des revendications 1 à 5, **caractérisé en ce qu'**il comporte un réflecteur de repliement assurant un doublement des passages du faisceau lumineux sur le réseau.

7. Filtre optique selon l'une des revendications 1 à 6, **caractérisé en ce que** le réflecteur de la configuration de Littman-Metcalf est un miroir plan (31) associé à un bi-prisme (30).

8. Filtre optique selon l'une des revendications 1 à 6, **caractérisé en ce que** le réflecteur de la configuration de Littman-Metcalf est un dièdre tronqué (21).

## Patentansprüche

1. Optischer Filter mit rechteckiger Charakteristik, der das Abschneiden eines begrenzten Spektralintervalls in einem Lichtfluss mit breitem Spektrum ermöglicht, umfassend:
- eine optische Eingangsfaser (1), die ein Ende (2) aufweist;
- eine Netz-Reflektor-Einheit (4, 5) in der Littman-Metcalf-Konfiguration;
- ein konvergentes optisches Kollimationssystem (8), in dessen Brennpunkt das Ende der Eingangfaser angeordnet ist,
- ein konvergentes optisches Fokalisierungssystem (10), das zwischen dem Netz und dem Reflektor angeordnet ist,
- mindestens einen Reflektor, der in der Fokalebene des optischen Fokalisierungssystems angeordnet ist, das eine begrenzte Abmessung in der Dispersionsebene aufweist, wobei die Position und die begrenzte Abmessung des Reflektors in der Dispersionsebene das abgeschnittene Spektralintervall bestimmen,
**dadurch gekennzeichnet, daß** es einen Polarisationstrenner (14) aufweist, der zwischen der Eingangsfaser und dem Netz angeordnet ist und zwei elementare parallele und orthogonal zueinander polarisierte Lichtstrahlen (15, 16) erzeugt, wobei eine λ/2-Lamelle (17) einem der elementaren Strahlen so zugeordnet ist, daß zwei elementare parallele, in einer Orthogonalrichtung zu den Netzlinien polarisierte Strahlen (15, 18) erzeugt werden, wobei der Reflektor der Littman-Metcalf-Konfiguration jeden elementaren Strahl auf die Bahn und in die entgegengesetzte Richtung des anderen zurückschickt.

2. Optischer Filter nach Anspruch 1, **dadurch gekennzeichnet, daß** die optische Eingangsfaser eine Monomode-Faser ist.

3. Optischer Filter nach einem der Ansprüche 1 und 2, **dadurch gekennzeichnet, daß** der erzeugte Lichtfluss mit begrenztem Spektrum in einer optischen Ausgangsfaser (20) gesammelt wird, die sich von der Eingangsfaser unterscheidet und von demselben Typ wie diese ist.

4. Optischer Filter nach Anspruch 3, **dadurch gekennzeichnet, daß** er mehrere optische Ausgangsfasern umfasst, wobei jede mit einem Reflektor verbunden ist, wobei diese Reflektoren in einer Fokalebene des optischen Fokalisierungssystems angeordnet sind und eine geringe Abmessung in der Dispersionsebene aufweisen und ein besonderes Spektralintervall definieren.

5. Optischer Filter nach einem der Ansprüche 1 und 2, **dadurch gekennzeichnet, daß** der erzeugte Lichtfluss mit begrenztem Spektrum von der Eingangsfaser gesammelt wird und daß diese einen optischen Zirkulator (11) trägt, der es ermöglicht, den Ausgangsfluss vom eingehenden Fluss ohne Energieverlust zu trennen.

6. Optischer Filter nach einem der Ansprüche 1 bis 5, **dadurch gekennzeichnet, daß** er einen Klappreflektor umfasst, der eine Verdoppelung der Durchgangsmengen des Lichtstrahls im Netz gewährleistet.

7. Optischer Filter nach einem der Ansprüche 1 bis 6, **dadurch gekennzeichnet, daß** der Reflektor der Littman-Metcalf-Konfiguration ein ebener Spiegel (31) ist, der mit einem Biprisma (30) verbunden ist.

8. Optischer Filter nach einem der Ansprüche 1 bis 6, **dadurch gekennzeichnet, daß** der Reflektor der Littman-Metcalf-Konfiguratin ein stumpfer Dieder (21) ist.

## Claims

1. A rectangular response optical filter for partitioning a limited spectral interval in a light flux with wide spectrum comprising:
- an input optical fibre (1) having one end (2),
- a grating-reflector assembly (4, 5) in Littman-Metcalf configuration,
- a converging collimation optical system (8) at the focal point thereof is located the end of the input fibre,
- a converging focusing optical system (10) located between the grating and the reflector,
- at least one reflector located in the focal plane of the focusing optical system which has a dimension limited in the dispersion plane, whereas the position and the limited dimension of the reflector in the dispersion plane determine the partitioned spectral interval,
**characterised in that** it comprises a polarisation separator (14) located between the input fibre and the grating and generating two elementary light beams (15, 16) parallel and polarised orthogonally with respect to one another, whereas a λ/2 plate (17) is located on one of the elementary beams in order to generate two elementary parallel beams (15, 18) polarised in a direction perpendicular to the lines of the grating, whereas the reflector of Littman-Metcalf configuration sends back each elementary beam onto the path and in opposite direction in relation to one another.

2. An optical filter according to claim 1, **characterised in that** the input optical fibre is a monomode fibre.

3. An optical filter according to one of claims 1 and 2, **characterised in that** the light flux generated with limited spectrum is collected in an output optical fibre (20) distinct from the input fibre and of the same type as the latter.

4. An optical filter according to claim 3, **characterised in that** it comprises several optical output fibres, each of them being connected to a reflector, these reflectors being positioned in the focal plane of the focusing optical system and having a small dimension in the dispersion plane and determining a particular spectral interval.

5. An optical filter according to one of claims 1 and 2, **characterised in that** the light flux generated with limited spectrum is collected by the input fibre and **in that** said fibre carries an optical circulator (11) enabling to separate the output flux from the incoming flux without any energy loss.

6. An optical filter according to one of claims 1 to 5, **characterised in that** it comprises a folding reflector doubling the number. of passages of the light beam on the grating.

7. An optical filter according to one of claims 1 to 6, **characterised in that** the reflector of Littman-Metcalf configuration is a planar mirror (31) connected to a bi-prism (30).

8. An optical filter according to one of claims 1 to 6, **characterised in that** the reflector of Littman-Metcalf configuration is a truncated dihedron (21).
